# EUROPEAN PATENT APPLICATION

(11) **EP 4 718 600 A1**
(43) Date of publication of application: **01.04.2026**
(21) Application number: 23210685.6
(22) Date of filing: 17.11.2023
(51) Int. Cl.: H01M 50/207, H01M 50/249, H01M 50/342

(54) **BATTERY HOUSING FOR ACCOMMODATING BATTERY DEVICE WITH MULTIPLE BATTERY CELLS FOR AN ELECTRIC AIRCRAFT**

(71) Applicant: Lilium eAircraft GmbH, 82234 Wessling (DE)
(72) Inventor: WIEGAND, Daniel, 82234 Wessling (DE); REICHMANN, Benjamin, 82234 Wessling (DE)
(74) Representative: Ter Meer Steinmeister & Partner

(57) **Abstract**

The invention is related to a Battery housing (10) for accommodating a battery device (20) with multiple battery cells (22) for an electric aircraft (100), comprising at least one inner wall (30) and at least one outer wall (40) forming together a battery volume (50) for holding the multiple battery cells (22), **characterised in that** the at least one outer wall (40) comprises an outside surface (42) wherein the outside surface (42) has an aerodynamical shape for completing a part of a fuselage (110) of the electric aircraft (100).

## Description

The present invention is related to a battery housing for accommodating a battery device with multiple battery cells for an electric aircraft, a mounting method for mounting such a battery housing and a battery assembly comprising a battery housing with a battery device.

It is common knowledge that if an aircraft has to be equipped with an electric engine a battery device is necessary to store and provide the electric energy. In the present concepts for electric aircrafts that batteries of battery devices are formed by multiple battery cells which need to be housed in a battery housing. In the present concepts furthermore the battery housing is usually an internal battery housing to be placed inside of the aircraft. This is in particular helpful due to security reasons to avoid any mechanical damage of the battery device in critical flight or landing situations, such as a crash of the aircraft.

Based on the present concepts one disadvantage is that the battery housings need to be placed inside of the aircraft and therefore need some space in the interior of the aircraft. Placing those battery housings inside therefore leads to reduced flexibility in the use of the inside space of the aircraft and thereby reduced space for cargo load and/or passenger space. Furthermore, such known housings usually are quite complex and thereby lead to additional problems as to manufacturing and mounting in particular placing them inside of the electric aircraft. Finally, an issue comes along with the additional weight provided not only by the battery device itself but by the material of the battery housing providing the security and coverage for the battery device.

It is one object of the present invention to solve the above-mentioned problems at least partly. In particular it is an object of the present invention to provide a cost efficient and easy reduction of weight and/or volume of a battery device for an electric aircraft.

Aforesaid object is achieved by a battery housing with the features of claim 1, a mounting method with the features of claim 14 as well as a battery assembly with the features of claim 16. Any features described with respect to the subclaims can be combined with each other freely.

According to the present invention a battery housing is provided for accommodating a battery device with multiple batteries cells for an electric aircraft. Such a battery housing comprises at least one inner wall and at least one outer wall forming together a battery volume for holding the multiple battery cells. An inventive battery housing is characterised in that the a least one outer wall comprises an outside surface wherein the outside surface as an aerodynamical shape for completing a part of a fuselage of the electric aircraft.

According to the present invention the battery housing is based on the present solutions of concepts of electric aircrafts. Thus, it needs to accommodate a battery device which is formed by multiple battery cells. To increase security and placement of the battery cells in the aircraft and in particular to also provide compression options to compress the multiple battery cells of the battery device, such battery volume can also be provided with cell compartments each accommodating one or more of those multiple battery cells.

According to the present invention the battery housing in contrast to the present solutions now comprise at least two different types of outer walls. One is considered to be an outer wall which has the inventive aerodynamical shape to complete the part of the fuselage. In other words, the outer wall thereby has a dual functionality. The first functionality is to complete the battery housing and close the battery volume for holding the multiple battery cells. Additionally, the second functionality of that outer wall is to provide the aerodynamical shape and to complete at least a part of the fuselage of the electric aircraft. As described later on, the fuselage of the aircraft has an outer aerodynamical shape which is basically build to either create aerodynamical functionality like close to the wings or reduce the aerodynamic friction with the surrounding air to increase the efficiency during flight operation of the electric aircraft.

According to the present invention it does not matter what type of aerodynamical shape is completed by the outside surface of the outer wall of the inventive battery housing. At least due to the combination of the two functionalities an additional closing wall which is necessary in the present concepts is no longer necessary in an inventive battery housing. Furthermore, the battery housing still comprises an inner wall to close the battery volume together with the outer wall.

Compared to the present solutions in present concepts due to the inventive double functionality of the outer wall to close the battery volume as well as to finalize and complete the fuselage of the aircraft, a reduction of needed mounting space as well as a reduction of weight can be achieved. Wherein in the known concepts the outer part of the fuselage needs space and weight as well as the outer wall of the battery housing needs space and weight, the combination of at least a part of the fuselage with an outer wall of the battery volume can get rid of at least parts of this additional weight and thus provides additional free space. Moreover, due to the position of the outer wall as being part of the fuselage of the aircraft the accessibility of the battery housing is optimized. As it is also described later on this beneficial accessibility can for example be used for a better and easier mounting process, a better and easier checking process and/or even a better and easier exchange of battery cells or the complete battery device.

Based on the present invention the aircraft still has a complete fuselage from the outside with respect to the necessary aerodynamical functionality as described above. Due to the inventive combination of the functionality the fuselage at least partly forms and completes the battery housing according to the present invention. In other words, the battery housing can be partly pre-mounted for example only comprising the inner wall and the multiple battery cells while this semi-finished component is then placed as part in the aircraft with the easier accessibility close to the outside of the aircraft. The battery housing then is completed and closed with the fuselage forming the outer wall which comprises the outside surface. As it can be derived from this description not only the final aircraft is optimized due to weight and complexity as well as optimized by increased free space usability but also the mounting steps as well as the potentially necessary exchange methods for the battery device are optimized by the use of the present invention.

It can be of advantage if according to the present invention the battery housing is characterised in that the outer wall comprises a mounting interface for reversible mounting at adjacent fuselage walls, for reversible mounting at structural aircraft elements and/or for reversible mounting at the at least one inner wall. The mounting interface thereby comprises a reversible mounting functionality. In other words, the mounting interface provides a demountability for demounting from the respective adjacent fuselage walls, the structural aircraft elements and/or the inner wall. This allows in particular to provide the optimized accessibility once the aircraft is already in use. For example, after a certain number of flight cycles the battery device needs to be checked and/or replaced by a new battery device. The proposed concept is advantageous as it provides the necessary accessibility to the battery device in order to improve the check and/or the exchange of the used battery devices. While at the present solutions with battery housings located inside, i.e. with battery housings not comprising at least a portion of a fuselage skin, a full or at least partly demounting of the fuselage is needed. According to the present invention the battery housing provides that accessibility to the battery devise is provided in an improved manner. In particular the mounting interface due to the reversible mounting can be used for a reversible demounting step and thereby improved accessibility to the battery device and/or the multiple battery cells is provided. Of course, that mounting interface can also integrate an electrical coupling system and functionality such that while mounting at the mounting interface the electrical connection is completed. By demounting from the mounting interface, a detachment in particular a high voltage detachment can be automatically provided by an electric decoupling.

It is further an advantage if according to the present invention the battery housing is characterised in that the mounting interface comprises an opening access defining an opening movement for the outer wall between a closing position and an opening position. This has to be understood as the mounting interface providing a defined movement between the two end positions meaning the opening position and closing position. The closing position is thereby defined to provide the aerodynamical shape in the continuous neighbourhood to the adjacent fuselage components. It has to be understood that in particular without any edge or additional friction surface the aerodynamical shape of the fuselage is fully completed by the outer wall of the battery housing in its closed position. The opening position can be defined for either a possibility for detachment from the mounting interface and/or for direct accessibility to the battery cells and/or the battery device as a whole. This leads to the optimized and improved capability for checking the battery device and/or exchange the battery device from the battery housing.

A further advantage can be achieved if according to the present invention the battery housing is characterised in that the mounting interface is detachable from a counter mounting interface at least in open position. As mentioned above in some circumstances it might be necessary to check, exchange or at least demount the battery device from the electrical aircraft. By reversible demountability in the open position from a counter mounting interface this can be done in an easy and quick manner. In particular in service situation the aircraft can provide an opening of the outer wall meaning a movement into the open position. As soon as the open position is arrived by demounting or detaching it from the counter mounting interface the full battery device still being connected to the outer wall can be detached from the electric aircraft in particular from the counter mounting interface. The detached battery device together with the outer wall can then be placed on a separate work bench for example for detailed examination or checking of the functionality of the battery device. To increase flight hours for the aircraft in the meantime a separate and/or a new battery device together with a new outer wall can be attached to the counter mounting interface, being moved back into the closed position and the aircraft is ready to fly again while the examination procedure for the detached battery device is still ongoing.

A further advantage can be achieved if according to the present invention the battery housing is characterised in that the at least one outer wall comprises at least one overpressure port to the battery volume, each overpressure port having a port closure for irreversible opening in response to overpressure in the battery volume. In some very rare cases it can occur that the battery device has an electrical and/or chemical problem. Some of those problems can result in so called thermal runaway situation wherein the pressure inside of the battery device increases rapidly. It is necessary from a security perspective to avoid an explosion due to high overpressure inside of the battery device. To solve that security issue according to this embodiment of the present invention at least one overpressure port is provided to the battery volume. That overpressure port can open automatically due to overpressure inside of the battery volume and thereby provides a release of such overpressure. The overpressure port can for example be part of a valve system in particular can be comprise a rupture line opening automatically and irreversible under overpressure inside of the battery volume. The opening is an opening to the outside and not the inside of the aircraft meaning that the overpressure gas causing that overpressure is released also to the outside of the aircraft. The release to the outside of the aircraft increases the security of this functionality even further. Those overpressure ports can in terms of reduction of weight and reduction of capacity for example be embodied as burst opening or burst discs. No channels or any further guiding elements for the overpressure gas is necessary since those overpressure ports directly are part of the outer wall and therefore directly open to the outside of the aircraft.

An additional advantage can be achieved if according to the present invention the battery housing is characterised in that the port closures comprise a hinge section for a hinge movement of the port closure from a sealed position sealing the battery volume to a release position releasing the overpressure gas from the battery volume. Such a hinge section allows a defined movement for the port closures. One big advantage of this hinge section is the fact that the port closures will not be released after the opening but will stay in a secure and defined release position. This avoids any particles, components or even the full port closures to be sucked into any fans or other engine parts of the aircraft thereby causing further damage in a mechanical way. The hinge prevents such complete detachment and thereby increases security and safety for those engine parts of the aircraft.

A further advantage can be achieved if according to the present invention the battery housing is characterised in that the port closure comprises multiple breaking lines breaking the port closure into closure pieces with a harmless diameter being of no harm for the fans of the aircraft. A harmless diameter is for example small enough to be considered to be harmless in terms of mechanical disruption or mechanical harm to fans or blades of an engine of an aircraft. If any part or particle from the opened port closure reaches a certain size it creates mechanical issues and problems when being sucked into the fans and the blades of the engine of an aircraft. Thereby from a mechanical perspective a harmless diameter can be defined according to the present invention meaning that a particle with a harmless diameter or smaller is considered to be harmless in terms of mechanical damage caused in the fans of the engine of the aircraft. Those breaking lines can be defined breaking lines as rupture lines or can be undefined breaking lines provided just by the material of the component of the port closure itself. For example, the port closure can be provided by a porous material which by opening the port closure can automatically break into powderlike small pieces which are automatically considered to be smaller than the discussed harmless diameter.

A further advantage can be achieved if according to the present invention the battery housing is characterised in that the port closure comprises a retaining element retaining the port closure of after leaving the sealing position. This can for example be equipped in terms of a hinge section as discussed further above. Of course, also safety lines or securing material bridges can be used to provide that securing functionality. Also, a hinge portion which provides a bending movement for parts of the port closure can be considered as a retaining element retaining the port closure in connection with the outer wall in case of leaving the sealing position.

It is further of advantage if according to the present invention the battery housing is characterised in that the at least one inner wall and/or the at least one outer wall comprise compartment walls dividing the battery volume and cell compartments. As discussed further above the battery volume can be partitioned into different cell compartments in particular in an even manner. Those cell compartments are configured to hold multiple battery cells and thereby allow a further separation of the different battery cells of the battery device. One further advantage of the use of compartment walls is the fact that between the compartment walls those battery cells can be compressed and thereby a necessary compression of battery cells can be accommodated by the existing internal compartment walls of the battery housing itself. If any overpressure ports are used in particular each of those compartment walls comprise such an overpressure port to the outside.

A further advantage can be achieved if according to the present invention a battery housing is characterised in that the multiple battery cells are arranged inside of the battery volume and at least partly covered by stabilization material in particular comprising stabilization foam. In other words, after the mounting step of moving an inserting the battery cells into the battery volume and/or into the compartments inside of the battery volume the remaining free space between the multiple cells can be filled for example with the stabilizing foam. Of course, also other mechanical solutions, for example light weight interface elements extending from one of the inner surfaces to the cells can be used to reduce the movement and in particular avoid any relative movement of the battery cells inside of the battery housing.

It is further of advantage if according to the present invention the battery housing is characterised in that the at least one inner wall and/or the at least one outer wall comprise structure elements for taking on structural loads from the fuselage of the electric aircraft. Structural elements are considered to take on load and provide load paths for the loads resulting from the operation of the electric aircraft. Those can be air loads as well as land loads for example during taxi, landing or take off of the aircraft. Also, the provision of a load path during the flight operation meaning any mechanical load being placed on the electric aircraft by the movement through the air can be guided through load paths via those structural elements. In other words, providing those additional structure elements provides an additional functionality and thereby reduces the need of separate structure elements in the aircraft. In other words, the battery housing thereby can be part of load paths inside of the electric aircraft and thereby increases the optimization of weight and space usage inside of the aircraft.

It is further of advantage if according to the present invention the battery housing is characterised in that the at least one outer wall has the outside surface completing a side part of the fuselage of the aircraft. By placing the outer wall at the side part of the fuselage the accessibility in terms of opening and getting access to the battery housing is increased even further. Also, the mounting process when producing such an electrical aircraft is optimized by positioning the outside surfaces at the side part of the fuselage of the aircraft.

It is further an advantage if according to the present invention the battery housing is characterised in that the at least one inner wall comprises an inner surface with a different geometrical extension than the outer surface of the at least one outer wall. The difference in geometrical extension means that the outer wall has an extension which is defined by the aerodynamical functionality to be provided by that outer surface. The inner surface does not need to provide that aerodynamical functionality thereby can be provided with a complete different geometrical extension. In particular it can comprise a simple inner geometrical extension which results in a reduced complexity and reduced costs for manufacturing.

It is a further aspect of the present invention to provide a mounting method for mounting an inventive battery housing according to the present invention and an electric aircraft. Such a mounting method comprises the following steps:
- placing multiple battery cells in the battery volume to create the battery device,
- mounting the battery housing at the electric aircraft completing at least a part of the fuselage.

The present inventive method uses an inventive battery housing and comes along with the same advantages and optimization as described in detail with respect to the inventive battery housing.

It is further an advantage if according to the present invention the mounting method is characterised in that before the mounting step the battery device is fully assembled and electrically connected to electric interfaces of the electric aircraft. In other words, the pre-connection from an electrical perspective allows an easy and in particular safe mounting at the electric aircraft. This can for example be achieved with the hinge functionality as described with respect to the inventive battery housing.

A further aspect of the present invention is to provide a battery assembly comprising at least one inventive battery housing, wherein the battery device with multiple battery cells is accommodated inside of the battery volume. Thereby, also an inventive battery assembly provides the same advantages as described in detail with respect to an inventive battery housing.

A further aspect of the present invention is to provide an electrical aircraft comprising at least one battery assembly according to the present invention. Thereby, also an inventive electrical aircraft provides the same advantages as described in detail with respect to an inventive battery housing.

Further embodiments of the present invention are described in detail with respect to the figures which show schematically:
- Figure 1: a first embodiment of an inventive battery housing,
- Figure 2: a further embodiment of an inventive battery housing,
- Figure 3: the embodiment of figure 2 in an opening position,
- Figure 4: a further embodiment of an inventive battery housing in an opening position,
- Figure 5: a further embodiment of an inventive battery housing,
- Figure 6: embodiment of figure 5 in a release position of the port closure,
- Figure 7: a further embodiment of the battery housing with a port closure in release position and
- Figure 8: a further embodiment of an inventive battery housing.

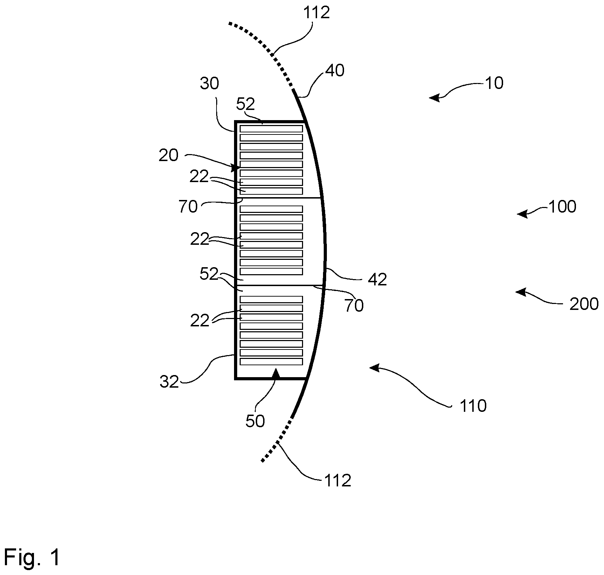

In figure 1 one embodiment of an inventive battery housing 10 is depicted. It shows the side part of a fuselage 110 of an electric aircraft 100. That side part of the fuselage 110 creates a fuselage wall 112 which is here partly completed by the outside surface 42 of an outer wall 40 of the battery housing 10. The battery housing 10 is providing a battery volume 50 created by the outer wall 40 and the inner wall 30. In the embodiment of figure 1 the battery volume 50 is divided into three or more cell compartments 52 by compartment walls 70. Each of those cell compartments 52 comprises several battery cells 22 forming the battery device 20 according to the present invention. Also, it can be seen that the geometrical extension of the outer surface 42 of the outer wall 40 is much more complex since it follows the aerodynamical shape of the fuselage wall 112 compared to the inner wall 30 with the inner surface 32.

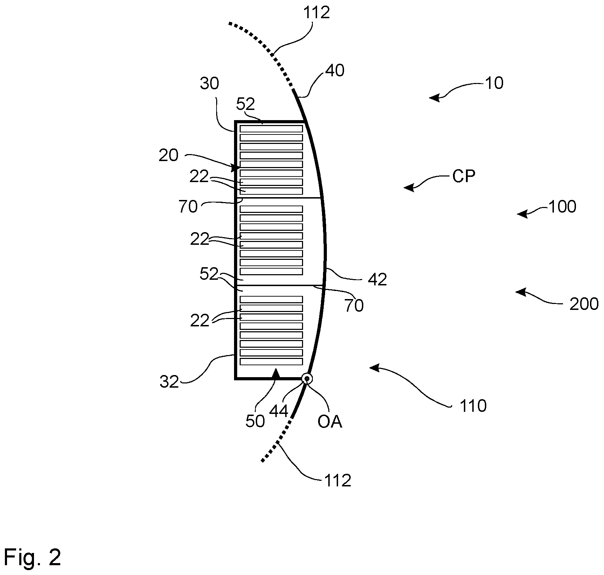

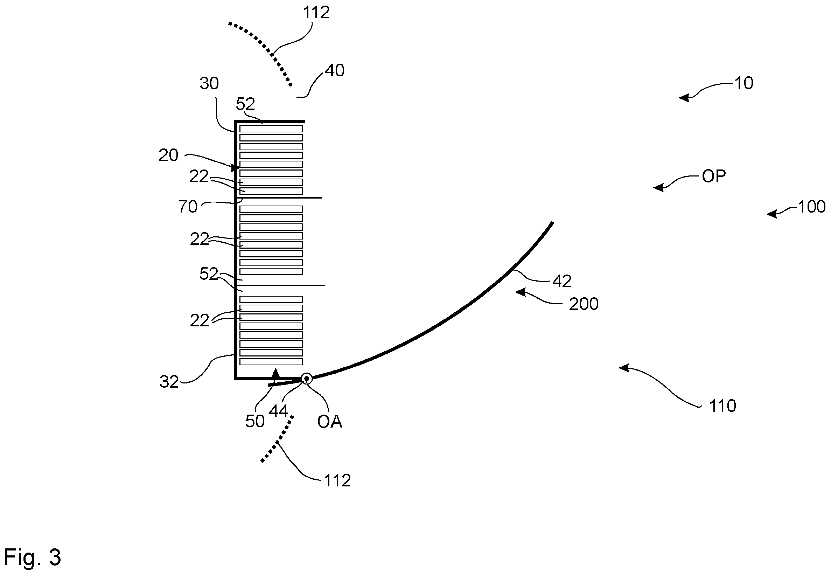

In figure 1 a further embodiment of the present invention is depicted providing the accessibility to the multiple battery cells 22. With a mounting interface 44 in form of a hinge an opening axis OA is provided. Figure 2 shows the situation of the outer wall 40 in its closing position CP while in the opening position OP in figure 3 accessibility to the multiple battery cells 22 is provided.

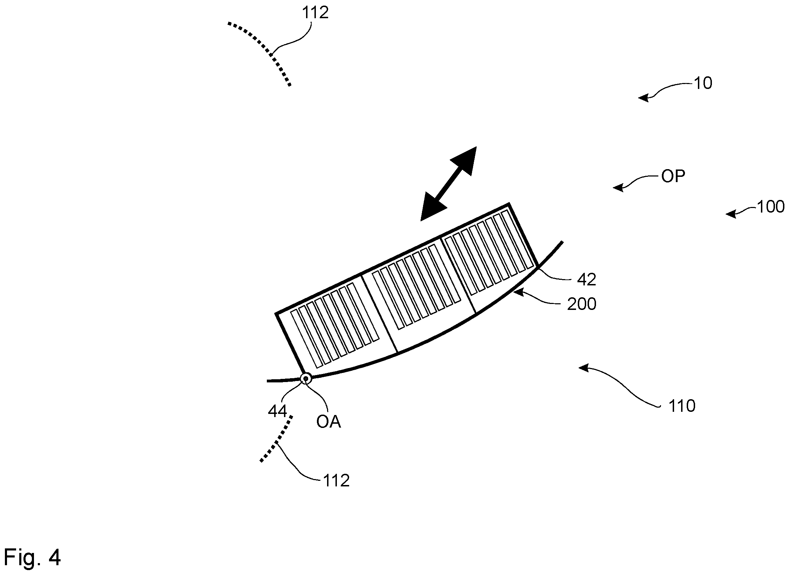

Figure 4 shows a different solution with respect to figures 2 and 3. In this embodiment the whole battery housing 10 can be moved from the closing position CP into the opening position OP as it is depicted in figure 4. Here the battery housing 10 including the inner wall 30 of the outer wall 40 can be detached for example from the mounting interface 44 and can for example be exchanged and replaced by a new battery housing 10.

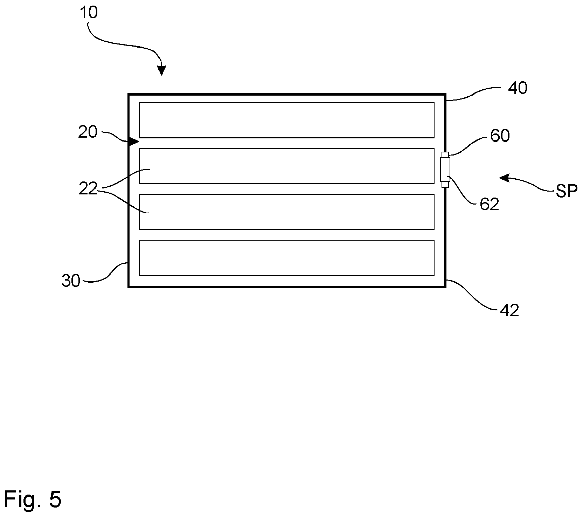

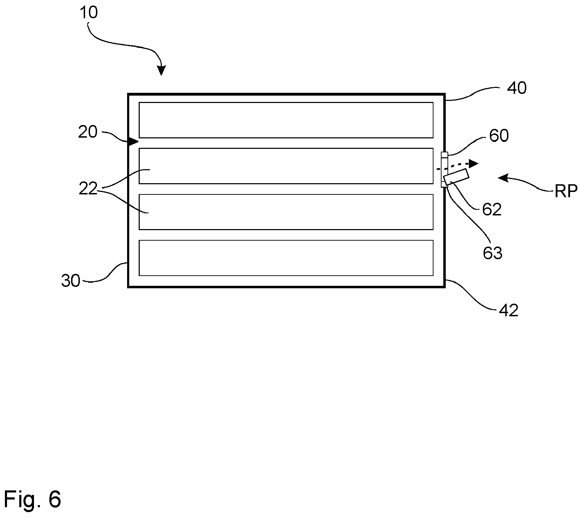

Figure 5 shows an overpressure security solution. Here a part of the battery housing 10 is depicted with one cell compartment 52 comprising an overpressure port 60. In figure 5 the overpressure port 60 is closed by the port closure 62 providing a sealed position SP. If the pressure inside of the cell compartment 52 increases over a certain threshold the port closure 62 is moved into a released position RP as for example is depicted in figure 6. Since this is part of the outer wall 40 the overpressure can be released as gas into the air outside of the electric aircraft and no further guiding channel for the overpressure gas is necessary.

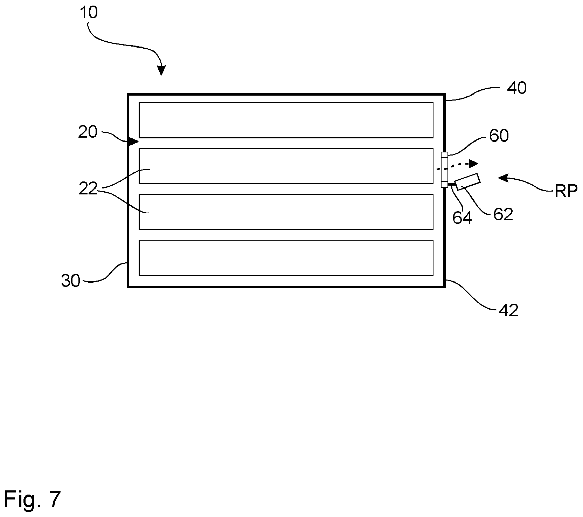

In figure 7 the closure port 62 further provides a retaining element 64 which can be part of the hinge section 63 as disclosed in figure 6. In both cases the result is that the port closure 62 remains in the released position RP in a situation connected to the outer wall 40 and thereby no harm can be caused in any fans of the engine of the electric aircraft 100.

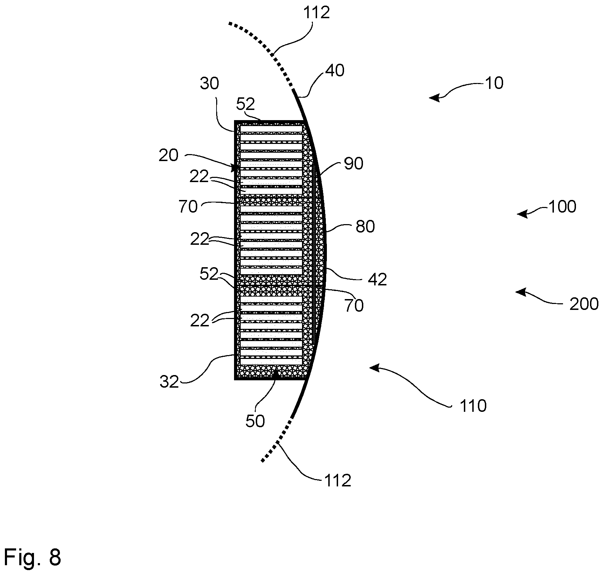

Figure 8 shows a further solution of the battery housing 10. In this case the cell compartments 52 are filled with stabilisation material 80 for example in form of stabilising foam. In this embodiment additionally a structure element 90 provides the possibility to take on loads from the outer wall 40 and thereby from the fuselage 110 of the aircraft 100. Since in this figure also the battery cells 20 are already embodied and accommodated inside of the battery volume 50 this also can be seen as a battery assembly 200 according to the present invention.

Aforesaid discussion of the embodiments only describes the present invention by the way of example.

### Reference signs

- 10: battery housing
- 20: battery device
- 22: battery cell
- 30: inner wall
- 32: inner surface
- 34: counter mounting interface
- 40: outer wall
- 42: outside surface
- 44: mounting interface
- 50: battery volume
- 52: cell compartment
- 60: overpressure port
- 62: port closure
- 63: hinge section
- 64: retaining element
- 70: compartment wall
- 80: stabilisation material
- 90: structure element

- 100: electric aircraft
- 110: fuselage
- 112: fuselage wall

- 200: Battery assembly

- OA: opening axis
- CP: closing position
- OP: opening position
- SP: sealed position
- RP: release position

## Claims

1. Battery housing (10) for accommodating a battery device (20) with multiple battery cells (22) for an electric aircraft (100), comprising at least one inner wall (30) and at least one outer wall (40) forming together a battery volume (50) for holding the multiple battery cells (22), **characterised in that** the at least one outer wall (40) comprises an outside surface (42) wherein the outside surface (42) has an aerodynamical shape for completing a part of a fuselage (110) of the electric aircraft (100).

2. Battery housing (10) according to claim 1, **characterised in that** the outer wall (40) comprises a mounting interface (44) for reversible mounting at adjacent fuselage walls (112), for reversible mounting at structural aircraft elements and/or for reversible mounting at the at least one inner wall (30).

3. Battery housing (10) according to claim 2, **characterised in that** the mounting interface (44) comprises an opening axis (OA) defining an opening movement for the outer wall (40) between a closing position (CP) and an opening position (OP).

4. Battery housing (10) according to claim 3, **characterised in that** the mounting interface (44) is detachable from a counter mounting interface (34) at least in open position (OP).

5. Battery housing (10) according to any of the proceeding claims, **characterised in that** the at least one outer wall (40) comprises at least one overpressure port (60) to the battery volume (50) each overpressure port (60) having a port closure (62) for irreversible opening in response to overpressure in the battery volume (50).

6. Battery housing (10) according to claim 5, **characterised in that** the port closures (62) comprise a hinge section (63) for a hinge movement of the port closure (62) from a sealed position (SP) sealing the battery volume (50) to a release position (RP) releasing overpressure gas from the battery volume (50).

7. Battery housing (10) according to any of claims 5 or 6, **characterised in that** the port closure (62) comprises multiple breaking lines breaking the port closure (62) into closure pieces with a harmless diameter being of no harm for the fans of the aircraft.

8. Battery housing (10) according to any of claims 5 to 7, **characterised in that** the port closure (62) comprises a retaining element (64) retaining the port closure (62) after leaving the sealing position (SP).

9. Battery housing (10) according to any of the proceeding claims, **characterised in that** the at least one inner wall (30) and/or the at least one outer wall (40) comprise compartment walls (70) dividing the battery volume (50) in cell compartments (52).

10. Battery housing (10) according to any of the proceeding claims, **characterised in that** the multiple battery cells (22) are arranged inside of the battery volume (50) and at least partly covered by stabilisation material (80), in particular comprising stabilisation foam.

11. Battery housing (10) according to any of the proceeding claims, **characterised in that** the at least one inner wall (30) and/or the at least one outer wall (40) comprise structure elements (90) for taking on structural loads from the fuselage (110) of the electrical aircraft (100).

12. Battery housing (10) according to any of the proceeding claims, **characterised in that** the at least one outer wall (40) has the outside surface (42) completing a side part of the fuselage (110) of the aircraft (100).

13. Battery housing (10) according to any of the proceeding claims, **characterised in that** the at least one inner wall (30) comprises an inner surface (32) with a different geometrical extension than the outer surface (42) of the at least one outer wall (40).

14. Mounting method for mounting a battery housing (10) with the features of any of claims 1 to 13 at an electric aircraft (100), comprising the following steps:
- Placing multiple battery cells (22) in the battery volume (50) to create the battery device (20),
- Mounting the battery housing (10) at the electric aircraft (100) completing at least a part of the fuselage (110).

15. Mounting method according to claim 14, **characterised in that** before the mounting step, the battery device (50) is fully assembled and electrically connected to electric interfaces of the electric aircraft (100).

16. Battery assembly (200) comprising at least one battery housing (100) with the features of any of claims 1 to 13, wherein a battery device (20) with multiple battery cells (22) is accommodated inside of the battery volume (40).

17. Electrical aircraft comprising at least one battery assembly (200) with the features of claim 16.
